# EUROPEAN PATENT APPLICATION

(11) **EP 4 262 056 A1**
(43) Date of publication of application: **18.10.2023**
(21) Application number: 22167748.7
(22) Date of filing: 12.04.2022
(51) Int. Cl.: H02K 1/18, H02K 1/20, H02K 7/18, F03D 9/25, H02K 9/04, H02K 9/08

(54) **NACELLE FOR A WIND TURBINE**

(71) Applicant: Siemens Gamesa Renewable Energy A/S, 7330 Brande (DK)
(72) Inventor: Jensen, Simon Vyff, 7160 Tørring (DK)
(74) Representative: SGRE-Association

(57) **Abstract**

It is disclosed a bedframe (40) for a nacelle (11) of a wind turbine (1), the nacelle (11) including an electric generator (15). The bedframe (40) extends between a first bedframe end (41) and a second bedframe end (42), the first bedframe end (41) being configured for connecting the bedframe (40) to a tower (12) of the wind turbine (1), the second bedframe end (42) being configured for connecting the bedframe (40) to a rotor (30) of the electric generator (15). The bedframe (40) includes at least one connecting device (43, 44) for connecting a stator (20) of the electric generator (15) to the bedframe (40) between the first bedframe end (41) and the second bedframe end (42).

## Description

### Field of invention

The present invention relates to a nacelle for a wind turbine and to a wind turbine including such nacelle.

### Art Background

A nacelle for a wind turbine typically comprises an electric generator having a rotor which rotates about a stator around a central rotational axis. In direct drive wind turbines, a permanent magnet electric generator is used, which has the generator rotor directly attached to the wind rotor and which rotates about the stator fixed to the structure of the nacelle by means of a fixed shaft.

During the development phase of offshore direct drive turbine of the greatest dimensions it have been identified that the fixed shaft is becoming proportionally short compared with its increase in diameter. This is for example due to the ever-growing diameter of the generators. Due to the increasing diameter-length ratio, the fixed shaft is becoming an increasingly expensive component. The objective may be changing boundary conditions of parts related to the fixed shaft. For example, one part which are becoming or could become an issue, is the number of bolts which are needed between the bedframe and the fixed shaft.

It is therefore desirable to provide a nacelle for a wind turbine, in particular a direct drive wind turbine, including more efficient and cost-effective constructional features for fixing the stator an electric generator to the nacelle.

### Summary of the Invention

This objective may be solved according to the independent claims. Advantageous embodiments of the present invention are described by the dependent claims.

According to a first aspect of the present invention, a bedframe for a nacelle of a wind turbine is provided, the nacelle including an electric generator. The bedframe extends between a first bedframe end and a second bedframe end, the first bedframe end being configured for connecting the bedframe to a tower of the wind turbine, the second bedframe end being configured for connecting the bedframe to a rotor of the electric generator, wherein the bedframe includes at least one connecting device for connecting a stator of the electric generator to the bedframe between the first bedframe end and the second bedframe end.

The bedframe is a structural component of the nacelle, to which the stator is fixedly attached and to which the rotor is rotary attached by means of a bearing. The bedframe permits the connection between the nacelle and the tower of the wind turbine.

The present invention permits to attach the stator directly to the bedframe between its first bedframe end second bedframe end, i.e. without using any stator shaft. This leads to a more simplified and cheaper construction with respect to the prior art.

According to embodiments of the present invention, the bedframe includes at least a first connecting device and a second connecting device for respectively connecting a first stator plate and a second stator plate of the stator. The connecting devices may be shaped as flanges.

According to a second aspect of the present invention, a nacelle for a wind turbine is provided, which includes an electric generator and the above-described bedframe.

The electric generator comprises a rotational axis. The first connecting device and the second connecting device may be distanced along the rotational axis of the electric generator, so that a first connecting device may be used for fixing a first drive end plate of the stator and a second connecting device may be used for fixing a second non-drive end plate of the stator

According to embodiments of the present invention, the first stator plate and/or the second stator plate respectively comprise respective pluralities of first and second circular sectors.

By using the pluralities of first and second circular sectors a plurality of stator modules may be formed, each stator module comprising a respective first circular sector and a respective second circular sector. The respective first and second circular sectors of each stator module are distanced along the rotational axis. This modular construction of the stator may result in a further reduction of construction costs, in particular regarding the number of hours needed for assembling the stator on the nacelle. Each stator module may an angular extension about the rotational axis comprised between 20 and 90 degrees. According to one embodiment of the present invention, six stator modules may be used each having an angular extension about the rotational axis of 60 degrees. According to another embodiment of the present invention, eight stator modules may be used each having an angular extension about the rotational axis of 45 degrees.

According to embodiments of the present invention, at least one stator module comprises a cooling fan between the respective first circular sector and second circular sector. At least one of the respective first and second circular sectors may comprise at least one cooling inlet and/or at least one cooling outlet.

According to a third aspect of the present invention, the above-described nacelle may be implemented in a direct drive wind turbine.

### Brief Description of the Drawings

The above-defined aspects and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including a nacelle having a bedframe and a generator according to the present invention.
Fig. 2 shows a longitudinal sectional view of a nacelle according to the present invention.
Fig. 3 shows another longitudinal sectional view showing magnified components of the nacelle in Fig. 2.
Fig. 4 shows a partial axonometric view of a nacelle according to the present invention.
Fig. 5 shows another partial axonometric view showing magnified components of the nacelle in Fig. 4.

### Detailed Description

The illustrations in the drawings are schematically. It is noted that in different figures, similar or identical elements are provided with the same reference signs.

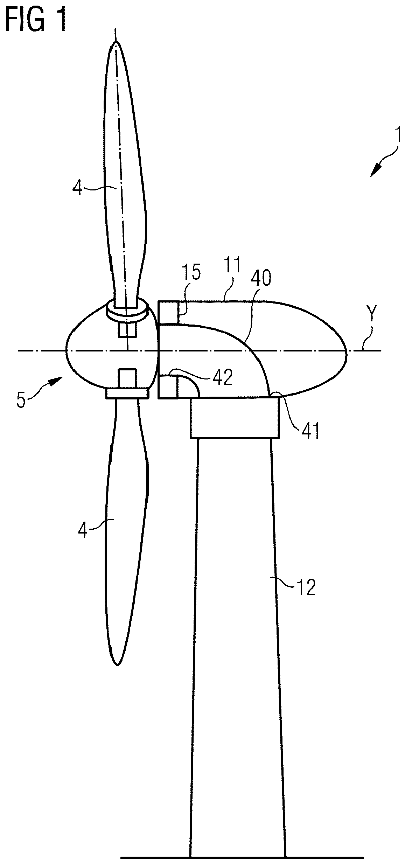

**Figure 1** shows a partial cross-sectional view of a wind turbine 1. The wind turbine 1 comprises a tower 12, which is mounted on a foundation. A nacelle 11 is rotatably mounted on top of the tower 11. The nacelle 11 includes an electric generator 15. The electric generator 10 may be a permanent magnet electric generator. The wind turbine 1 further comprises at least a wind rotor 5 having a hub and at least one blade 4 (in the embodiment of Figure 1, the wind rotor comprises three blades 4, of which only two blades 4 are visible). The wind rotor 5 is rotatable about a longitudinal rotational axis Y. The terms axial, radial and circumferential in the following are to be intended with reference to the rotational axis Y of rotation of the electric generator 15. The blades 4 extend substantially radially with respect to the rotational axis Y. The wind rotor 5 provides the torque input, which is transmitted to the electric generator 15. The electric generator 15 includes a stator 20 and a rotor 30. The rotor 30 is rotatable with respect to the stator 20 about the rotational axis Y. The wind rotor 5 is solidly coupled with the rotor 30. The wind rotor 5 rotates together with the rotor 30, so that the power from the wind that impinges the blades 4 is transmitted to the electric generator 15, for the generation of electric power.

The nacelle 11 further includes a bedframe 40 extending between a first bedframe end 41 and a second bedframe end 42. The first bedframe end 41 is configured for connecting the bedframe 40 to the tower 12, so that the nacelle 11 can be rotated about a yaw axis. The second bedframe end 42 is configured for connecting the bedframe 40 to the rotor 30, so that the rotor 30 can rotate about the rotational axis Y.

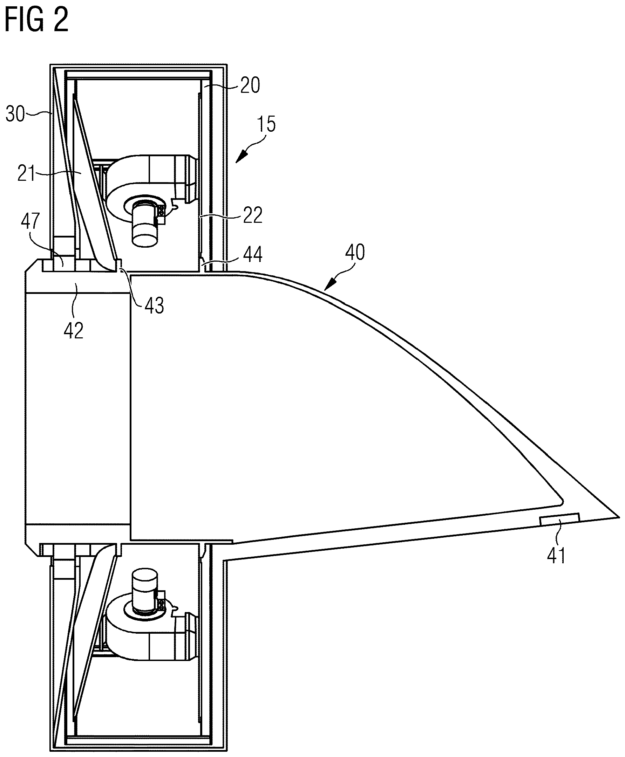

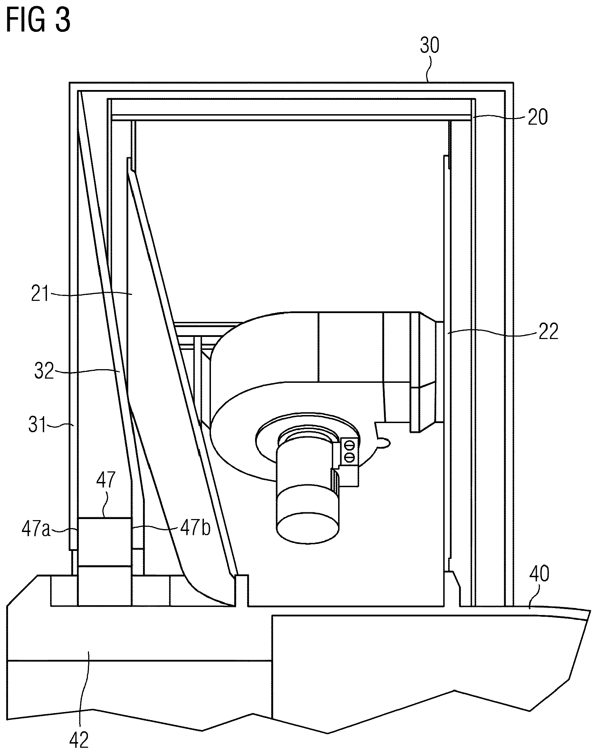

**Figures 2** and **3** show an embodiment of the nacelle 11, illustrating the coupling between the bedframe 40 and the electric generator 15. The first bedframe end 41 provides an interface for connecting the bedframe 40 to the tower 12. The first bedframe end 41 is connectable with a rotation mechanism (not shown in the attached figures) which is active on the bedframe 40 for rotating the nacelle 11 about the yaw axis. At the second bedframe end 42 a bearing 47 may be mounted for providing a rotatable connection between the bedframe 40 and the rotor 30. The bearing 47 extends between two axial ends 47a, 47b. The rotor 30 is connected to the bearing 47 by means of two rotor plates 31, 32, which are respectively connected to the two axial ends 47a, 47b of the bearing 47. The bedframe 40 includes at least one connecting device for connecting the stator 20 of to the bedframe 40 between the first bedframe end 41 and the second bedframe end 42. In the embodiment of figures 2 and 3, the bedframe 40 comprises a first connecting device 43 and a second connecting device 44, the first connecting device 43 and the second connecting device 44 being distanced along the rotational axis Y. The first connecting device 43 is closer to the first bedframe end 41 than the second connecting device 43. The first connecting device 43 is therefore also closer to the drive end of the electric generator 15 than the second connecting device 43, the drive end of the electric generator 15 being defined as the axial end of the electric generator 15, which is closer to the wind rotor 5. The connecting devices 43, 44 may be shaped as respective flanges, radially protruding from a main body of the bedframe 40. The stator 20 may comprise a first stator plate 21 and a second stator plate 22 respectively connected to the first connecting device 43 and the second connecting device 44. The first stator plate 21 and the second stator plate 22 have an annular shape about the rotational axis Y. According to different embodiment of the invention, the first stator plate 21 and the second stator plate 22 may be planar or cylindrical. The stator plates 21, 22 may be respectively attached to the connecting devices 43, 44 by means of respective connections. Such connections may be bolted connections or welded connections.

The bedframe 40 provides a structural connection between the tower 12 and the electric generator 15, through the coupling between the rotor 30 and the bearing 47 at the second bedframe end 42 and the coupling between the stator 20 and the connecting devices 43, 44.

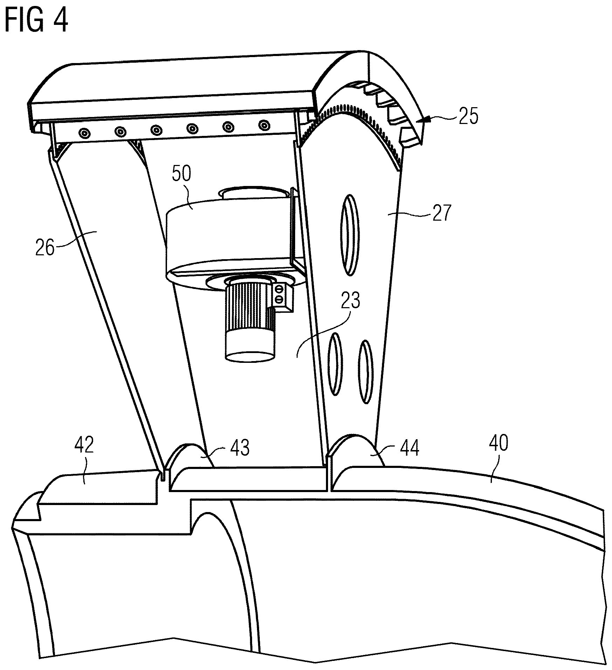

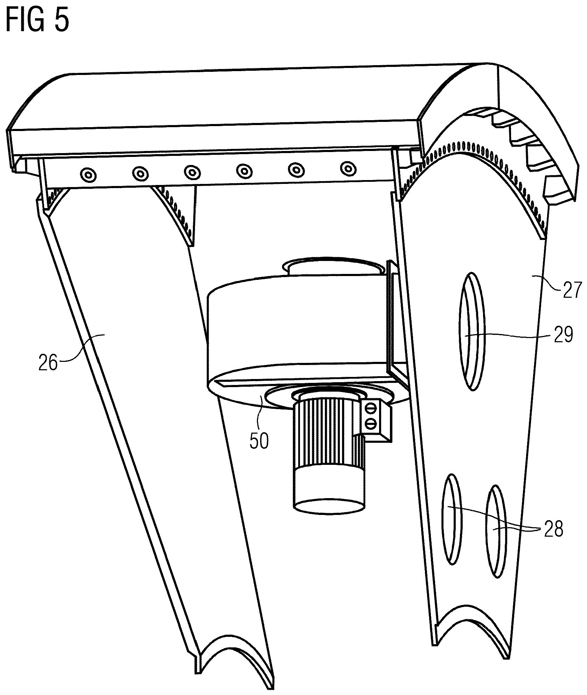

**Figures 4** and **5** show an embodiment of the nacelle 11, illustrating details of the stator 20. The first stator plate 21 and the second stator plate 22 comprise respective pluralities of first and second circular sectors 26, 27.
The stator 20 comprises a plurality of stator modules 25, each module 25 comprising one respective first circular sector 26 and one respective second circular sector 27 distanced along the rotational axis Y. Each stator module 25 is hollow and includes an inner volume 23. In the embodiment of the attached figures, the stator 20 comprises eight stator modules 25, each stator module 25 having an angular extension of 45 degrees. According to other embodiments (not shown) of the present invention, each stator module 25 may have an angular extension about the rotational axis Y, which is comprised between 20 and 90 degrees. For example, the stator 20 may comprise six stator modules 25, each stator module 25 having an angular extension of 60 degrees. At least one stator module 25 may comprise a cooling fan 50 between the respective first circular sector 26 and second circular sector 27. According to embodiments of the present invention, stator module 25 may comprise a cooling fan 50 between the respective first circular sector 26 and second circular sector 27. The cooling fan 50 provides air circulation in the inner volume 23 for cooling the stator 20. In each stator module 25, at least one of the respective first and second circular sectors 26, 27 may comprise at least one cooling inlet 28 and/or one cooling outlet 29, for respectively letting colling air circulate to and from the inner volume 23. The cooling inlet(s) 28 may be connected with an inlet of the cooling fan 50. The cooling outlet(s) 29 may be connected with an outlet of the cooling fan 50.

## Claims

1. A bedframe (40) for a nacelle (11) of a wind turbine (1), the nacelle (11) including an electric generator (15), the bedframe (40) extending between a first bedframe end (41) and a second bedframe end (42), the first bedframe end (41) being configured for connecting the bedframe (40) to a tower (12) of the wind turbine (1), the second bedframe end (42) being configured for connecting the bedframe (40) to a rotor (30) of the electric generator (15), wherein the bedframe (40) includes at least one connecting device (43, 44) for connecting a stator (20) of the electric generator (15) to the bedframe (40) between the first bedframe end (41) and the second bedframe end (42).

2. The bedframe (40) according to claim 1, wherein the bedframe (40) includes at least a first connecting device (43) and a second connecting device (43) for respectively connecting a first stator plate (21) and a second stator plate (22) of the stator (20).

3. The bedframe (40) according to claim 2, wherein the at least one connecting device (43, 44) is shaped as a flange.

4. The bedframe (40) according to claim 3, wherein the stator (20) is connected to the at least one connecting device (43, 44) by means of a bolted or a welded connection.

5. A nacelle (11) of a wind turbine (1) including an electric generator (15) and a bedframe (40) according to any of the previous claims.

6. The nacelle (11) according to claim 5, wherein the first connecting device (43) and the second connecting device (44) are distanced along a rotational axis (Y) of the electric generator (15), the first connecting device (43) being closer to the first bedframe end (41) than the second connecting device (44).

7. The nacelle (11) according to claim 5 or 6, wherein the first stator plate (21) and/or the second stator plate (22) comprise respective pluralities of first and second circular sectors (26, 27).

8. The nacelle (11) according to claim 7, wherein the stator (20) comprises a plurality of stator modules (25), each module (25) comprising a respective first circular sector (26) and a respective second circular sector (27), the respective first and second circular sectors (26, 27) being distanced along the rotational axis (Y).

9. The nacelle (11) according to claim 8, wherein at least one stator module (25) comprises a cooling fan (50) between the respective first circular sector (26) and second circular sector (27).

10. The nacelle (11) according to claim 9, wherein at least one of the respective first and second circular sectors (26, 27) comprises at least one cooling inlet (28).

11. The nacelle (11) according to claim 9 or 10, wherein at least one of the respective first and second circular sectors (26, 27) comprises at least one cooling outlet (29).

12. The nacelle (11) according to any of the claims 8 to 11, wherein each stator module (25) has an angular extension about the rotational axis (Y) comprised between 20 and 90 degrees.

13. A wind turbine (1) including the nacelle (11) according to any of the previous claims 5 to 12.
